# EUROPÄISCHE PATENTSCHRIFT

(11) **EP 0 845 387 B1**
(45) Veröffentlichungstag und Bekanntmachung des Hinweises auf die Patenterteilung: **08.08.2001**
(21) Anmeldenummer: 97120596.8
(22) Anmeldetag: 25.11.1997
(51) Int. Cl.: B60P 1/00

(54) **Entladevorrichtung für in einem Fahrzeug transportierte Schüttgüter**
Unloading device for bulk material in a vehicle
Dispositif de déchargement de produits granuleux transportés dans un véhicule de type tombereau.

(30) Priorität: 27.11.1996 FR 9614728
(43) Veröffentlichungstag der Anmeldung: 03.06.1998
(73) Patentinhaber: Railtrans, 78810 Feucherolles (FR); Bretagne Baches, 44390 Nort-sur-Erdre (FR); A B R F Industries, 44141 Chateaubriant Cedex (FR)
(72) Erfinder: Jost, Dieter, 83360 Grimaud (FR)
(74) Vertreter: Stenger, Watzke & Ring Patentanwälte

(56) Entgegenhaltungen:
- DE-B- 1 097 363
- FR-A- 1 408 889
- GB-A- 1 014 693
- US-A- 2 662 650
- PATENT ABSTRACTS OF JAPAN vol. 007, no. 141 (M-223), 21.Juni 1983 & JP 58 053530 A (TOUHOKU GOMU KK), 30.März 1983,

## Beschreibung

Die Erfindung betrifft eine Entladevorrichtung für in einem Fahrzeug transportierte und durch eine Entladeöffnung des Laderaums entladbare Schüttgüter, beispielsweise körnige Produkte in loser Schüttung, mit einer auf dem Boden des Fahrzeugs aufliegenden, das Schüttgut aufnehmenden aufblasbaren Unterlage, die aus wenigstens einem dichten Beutel oder Balg aus flexiblem Material, insbesondere aus Leinen, nach Art eines Airbags gebildet ist. Die Entladevorrichtung kann an einem Fahrzeug beliebiger Art, wie beispielsweise einem Eisenbahnwaggon, einem Sattelauflieger, einem Kippwagen und dgl. transportiert werden, wobei in Abhängigkeit von der Art des Fahrzeugs das Beladen über das Dach oder die Seiten und das Entladen über die Seiten durchgeführt wird.

Schüttgüter oder körniger Produkte in loser Schüttung, wie z. B. Holz- und Sägespäne, die insbesondere in der Papierindustrie verwendet werden, können in offenen, hochbordigen Güterwagen oder jedem anderen dafür eingerichteten Fahrzeug transportiert werden. Die Entladung wird im allgemeinen durch Ausschieben der Ladung mittels Fahrzeugen, wie Radladern bzw. Staplern vorgenommen, die mit einem Vorsatzgerät in Form eines Ausstoßers oder Löffelbaggers versehen sind, mit dem die Ladung quer über die Seiten ausstoßbar ist, wobei das Entladefahrzeug auf dem Boden außerhalb des Transportfahrzeugs verfahren wird. Dabei verursachen die Ausstoßer oder das Entladefahrzeug selbst Beschädigungen an dem Transportfahrzeug und insbesondere an den Strukturen, wie an Gestängen, Trägern und Scharnieren der Seitenklappen, die beispielsweise an einem Waggon anstelle von Wänden angeordnet und zur Entladung offen sind.

Es sind ferner im Transportfahrzeug angeordnete Entladevorrichtungen für Schüttgüter bekannt. Gemäß der US 2 662 650 A wird Schüttgut aus einem Sattelauflieger entladen, indem ein auf dem Boden aufliegendes flexibles Material nach Art eines Vorhangs mittels einer Winde oder dgl. hochgezogen wird, so daß das aufliegende Transportgut aufgrund der erzeugten Schräglage abgleitet und auf der Entladeseite aus dem Fahrzeug ausgeschoben wird. Eine derartige Einrichtung eignet sich jedoch nicht zum Entladen von Gütern mit spezifisch schwerem Gewicht, wie beispielsweise Sand, Kies oder Steinen.

Aus der FR 1 408 889 A und der DE 1 097 363 A ist eine im Transportfahrzeug angeordnete Entladeeinrichtung bekannt, bei der das Entladen des Schüttguts durch ein auf der Plattform des zu entladenden Fahrzeugs aufliegendes, mit Luft aufpumpbares Kissen erfolgt, das in aufgepumptem Zustand eine schräge Ebene zur Entladeseite des Fahrzeugs in der Art bildet, daß das Schüttgut auf der Schrägfläche des Kissen abgleitet und dieser Art entladen werden kann. Eine vollständige Entleerbarkeit des Transportfahrzeugs ist insbesondere dann nicht gewährleistet, wenn schwer gleitfähige Güter entladen werden müssen.

Schließlich ist eine Entladevorrichtung der eingangs genannten Art aus der FR-A-1 408 889 bekannt, die eine auf dem Boden des Fahrzeugs aufliegende, das Entladegut aufnehmende aufblasbare Unterlage aufweist. Zum Entladen wird diese aufblasbare Unterlage durch eine Öffnung aufgeblasen und bildet langsam eine Rampe, auf der das Entladegut zur Entladeöffnung des Fahrzeugs rutschen und auf diese Weise entnommen werden kann. Dabei erhält die aufblasbare Unterlage durch das Aufpumpen die Form eines "Keilkissens", welches eine obere Schrägfläche besitzt.

Der Erfindung liegt in Anbetracht dieses Standes der Technik die **Aufgabe** zugrunde, unter Meidung der genannten Nachteile eine im Transportfahrzeug angeordnete Entladevorrichtung zu schaffen, mit der im Gegensatz zu dem Eingreifen eines Entladefahrzeugs von außen eine von innen heraus wirkende, aktive vollständige Entleerung in kürzester Zeit gewährleistet ist.

Die Aufgabe ist an einer Entladevorrichtung der eingangs genannten Art erfindungsgemäß dadurch **gelöst,** daß die Form des Airbags im aufgeblasenen Zustand derart ist, daß er den gesamten Rauminhalt des Laderaums einnimmt. Vorzugsweise bedeckt der Beutel oder Balg in luftleerem Zustand den Boden des Fahrzeugs und bildet eine sich im wesentlichen über die gesamte Höhe erstreckende Wand gegenüber der Entladeöffnung.

Durch die Erfindung wird erreicht, daß die Form des Beutels im aufgeblasenen Zustand derart ist, daß der gesamte Rauminhalt der in dem Fahrzeug, insbesondere einem Eisenbahnwaggon oder dgl., angeordneten Ladung eingenommen wird, wobei der Beutel, wenn die Luft herausgelassen ist, den Boden des Fahrzeugs bedeckt und eine über die gesamte Höhe des Fahrzeugs reichende Wand gegenüber der Entladeöffnung bildet. Damit läßt sich die erfindungsgemäße Entladevorrichtung leicht in einen offenen hochbordigen Güterwagen oder jede andere Art von Fahrzeug, wie Muldenkipper oder Sattelauflieger, einpassen. Die Entladevorrichtung ist dafür eingerichtet, als Zubehör nachträglich an allen Fahrzeugarten zur Entladung von Schüttgütern eingesetzt zu werden. Sie ist außerdem, je nach Bedarf, im Falle einer zufälligen Beschädigung leicht zu ersetzen oder zu reparieren.

Gemäß einer bevorzugten, für ein Fahrzeug mit Entladeöffnungen auf seinen beiden Längsseiten vorgesehenen Ausführungsform der Erfindung bildet der Beutel oder Balg eine vertikale Mitteltrennwand im Fahrzeug, die sich in Längsrichtung erstreckt und das Fahrzeug zwischen den seitlichen Entladeöffnungen unterteilt. Damit bildet der Beutel in der inaktiven Position eine mittlere Längstrennwand im Fahrzeug, die den Rauminhalt des Fahrzeugs für die Schüttgüter zwischen den seitlichen Entladeöffnungen teilt, so daß eine gleichzeitige Entladung der Schüttgüter im Wege des Aufblasens zu beiden Seiten hin vorgenommen werden kann.

Gemäß einer zweckmäßigen Weiterbildung der Erfindung ist vorgesehen, daß der Beutel oder Balg zur Befestigung am Fahrzeug Futterale aufweist, die mit Befestigungseinrichtungen zusammenwirken, welche die Futterale einerseits auf der Ebene der Entladekante und andererseits am oberen Teil des Fahrzeugs positionieren. Dabei können die Befestigungseinrichtungen von einem in dem Futteral laufenden Tau gebildet sein, wobei das Tau zwischen Haken gespannt ist, die mit den Wänden des Fahrzeugs verbunden sind und wobei das Tau Einstellungsvorrichtungen für eine geeignete Spannung aufweist. Zum Schutz der Futterale können die Taue von einer Umhüllung aus widerstandsfähigem Material umgeben sein. Eine Einstellvorrichtung für die Spannung kann eine einstellbare Verankerung nach Art eines Spannschlosses sein.

Alternativ können die Taue mittels einer oder mehrerer Muffen aus Kunststoffmaterial ummantelt sein, die die Futterale des Beutels oder Balgs schützen.

Gemäß einer bevorzugten Ausführungsform der Erfindung ist der Beutel oder Balg einstückig aus einem Leinentuch, das auch die Befestigungseinrichtungen umhüllt oder Futterale dafür bildet, hergestellt. Gemäß einer anderen Ausführungsform ist der Beutel oder Balg aus einer im wesentlichen zylindrischen Hülle aus einem Leinentuch, das auch die Befestigungseinrichtungen umhüllt oder Futterale dafür bildet, und faltbaren Seitenwänden aus Leinen hergestellt, die an den Querwänden des Fahrzeugs angeordnet sind.

Es kann gemäß einer weiteren zweckmäßigen Ausgestaltung der Erfindung vorteilhaft sein; den Beutel oder Balg in dem von der Entladeöffnung entfernten Bereich oben mittig zu stützen, beispielsweise durch Zwischeneinhängen an einem Mittelbalken des Fahrzeugs, der in Längsrichtung an seinem oberen Bereich angeordnet ist. Ferner kann es vorteilhaft sein, das Fahrzeug auf halber Länge mittels einer Querwand zu unterteilen und für jeden so gebildeten Bereich einen Beutel oder Balg vorzusehen, der jeweils zwei Abteilungen zum Aufnehmen des Schüttguts und gleichzeitigem Entladen bildet.

Zum Aufblasen und Entleeren des Beutels oder Balgs weist dieser eine in seinem unteren Mittelbereich angeordnete Aufblasöffnung auf, die in Form eines Anschlußstücks mit großem Durchmesser in der Größenordnung von 10 cm ausgebildet ist, um insbesondere ein schnelles Luftablassen bei atmosphärischem Druck zu ermöglichen, wobei das Anschlußstück mit einem Durchmesserreduzierstück versehen ist, das entsprechend der Kapazität des fahrzeugeigenen Druckluftgenerators eingerichtet ist, um das Aufblasen unter Druck zu ermöglichen.

Weitere Einzelheiten, Merkmale und Vorteile des Gegenstandes der Erfindung ergeben sich aus der nachfolgenden Beschreibung eines Ausführungsbeispiels einer Entladevorrichtung, die in der anliegenden Zeichnung schematisch dargestellt ist. In der Zeichnung zeigt:
- Fig. 1: eine schematische Perspektivansicht eines mit einer erfindungsgemäßen Entladevorrichtung ausgestatteten Sattelaufliegers,
- Fig. 2: einen Querschnitt des in Fig. 1 dargestellten Fahrzeugs, schematisch,
- Fig. 3: die Befestigung des Airbags an einer der Wände des Sattelaufliegers in vergrößerter perspektivischer Detaildarstellung und
- Fig. 4: ein Spannstück der Befestigungseinrichtung in einer perspektivischen Detailansicht.

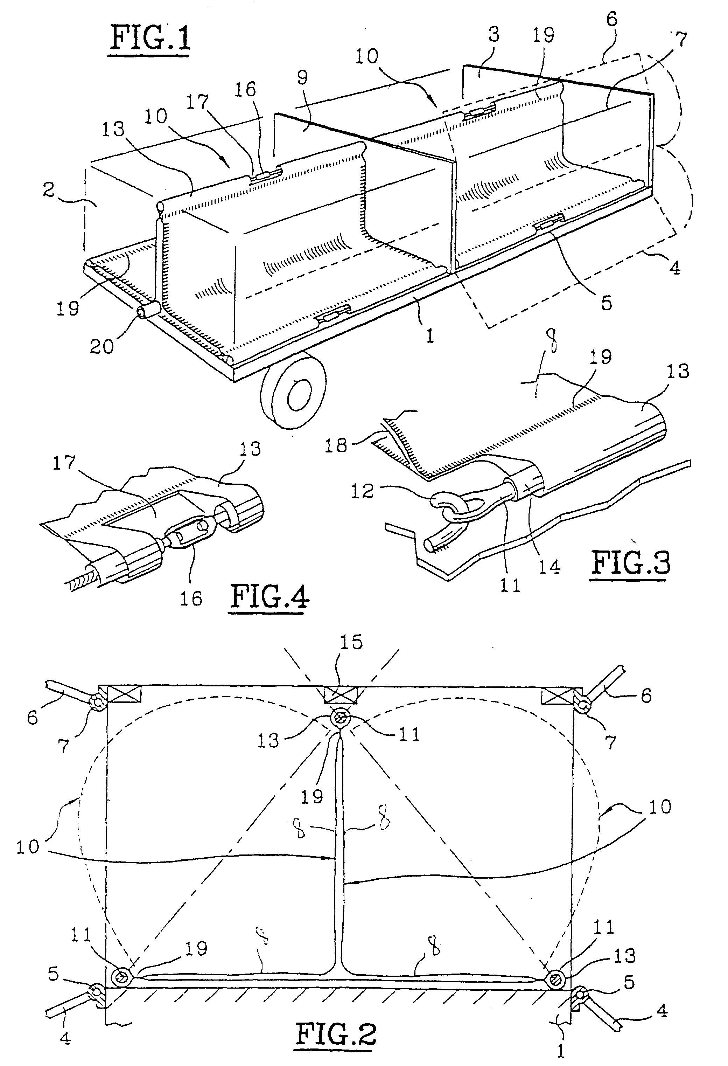

Das in Fig. 1 dargestellte Fahrzeug ist ein offener hochbordiger Güterwagen. Es kann sich ebenso um einen einfachen Anhänger oder Muldenkipper mit Öffnungen zum seitlichen Entladen oder vorzugsweise einen Eisenbahnwaggon handeln.

Dieses Fahrzeug weist einen oben offenen Gütertransportraum bzw. Laderaum auf, der von einem Boden 1, endseitigen Querwänden 2 und 3 und in Längsrichtung sich erstreckenden Seitenwänden gebildet ist. Die Seitenwände sind vorzugsweise von Klappen 4 und 6 gebildet, die das seitliche Entladen erleichtern. Die untere Klappe 4 erstreckt sich in Längsrichtung mit einer Höhe, die der Hälfte der Höhe des Fahrzeugs entspricht und die auf der Ebene der Entladekante am Boden 1 um eine Achse 5 schwenkbar angeordnet ist. Über der unteren Klappe 4 ist die obere Klappe 6 angeordnet, die gemeinsam mit der unteren Klappe 4 die Seitenwand bildet. Die obere Klappe 6 erstreckt sich in Längsrichtung über die obere Hälfte des Fahrzeugs und ist um eine Achse 7 nach oben schwenkbar angeordnet, die auf der Ebene der oberen Kante des Fahrzeugs angeordnet ist.

Das in Fig. 1 der Zeichnung dargestellte Fahrzeug weist ferner eine feste oder lösbare mittlere Quertrennwand 9 auf, die auf halber Fahrzeuglänge angeordnet ist und den Transportraum für die Schüttgüter in zwei Bereiche unterteilt. Jeder Teil enthält eine Entladevorrichtung, die aus einem dichten Beutel oder Balg 10 nach Art eines Airbags aus geeignetem Leinen gebildet ist, welches ausreichend widerstandsfähig für das zu transportierende Material ist. Das Leinentuch 8 dieses Beutels 10 bildet eine Decke, die in Lade-Position auf der gesamten Fläche des Bodens 1 des Fahrzeugs aufliegt und die sich vertikal gemäß der mittleren Längsebene des Fahrzeugs gegenüber den durch die Klappen 4, 6 verschließbaren seitlichen Entladeöffnungen des Fahrzeugs über die gesamte Höhe erstreckt, so daß sie eine Art Trennwand bildet, die den Laderaum in zwei Abteilungen unterteilt, welche die Produkte in. loser Schüttung, beispielsweise Holzspäne oder anderes, aufnehmen.

Wenn der Beutel 10 mit Luft gefüllt wird, nimmt er die mit der gestrichelten Linie in Fig. 2 der Zeichnung verdeutlichte Form ein, womit der Beutel 10 den Rauminhalt des Fahrzeugladeraums ausfüllt und die Transportmaterialien seitlich nach Öffnen der Klappen 4 und 6 durch die so gebildete Entladeöffnung über die Abschlußkante des Bodens 1 nach außen hinausgedrückt werden.

Der Beutel 10 ist an dem Fahrzeug und insbesondere an den Querwänden oder am Boden 1, wie in Fig. 3 dargestellt ist, mittels eines Taus 11 befestigt, das zwischen Haken 12, die mit den Querwänden oder im Boden 1 fest verbunden sind, gespannt ist. Die Haken 12 können auch versenkbar oder in Form einer Öffnung oder dgl. ausgebildet sein, um den Rauminhalt für Transportgut freizuhalten, wenn das Fahrzeug nicht nur für den Transport von Produkten in loser Schüttung verwendet wird.

Das Tau 11 weist eine zur Verbindung mit dem jeweiligen Haken geeignete Endgestaltung, beispielsweise in Form einer Öse, auf. Es ist in einem mit dem Beutel 10 verbundenen Futteral 13 gelagert. Eine um das Tau 11 gelegte Umhüllung 14 ermöglicht, das Futteral 13 zu schützen und eine zu schnelle Abnutzung oder sogar Beschädigung des Futterals zu vermeiden.

Der Beutel 10 ist somit am Boden 1 auf der Ebene jeder der Seitenlängskanten, über die das Entladen durchgeführt wird, und außerdem in gleicher Weise am oberen Teil des Fahrzeugs auf den Querwänden oder an einem länglichen Mittelbalken 15 befestigt, der im oberen Bereich des Fahrzeugs zwischen den endseitigen Querwänden 2 und 3 und der mittleren Quertrennwand 9 angeordnet ist. Der obere Balken 15 schützt auch den oberen Bereich des Beutels 10 während der Beladungsvorgänge und ermöglicht die Befestigung des oberen Bereichs des Beutels 10 durch wenigstens ein Zwischeneinhängen zwischen den Enden des Taus 11.

Sämtliche Taue 11 werden mittels je eines Spannschlosses 16, das zum Beispiel auf ihrer halben Länge angeordnet ist und das dank eines in dem Futteral 13 angeordneten Fensters 17 zugänglich ist, gespannt.

In der Queransicht gemäß Fig. 2 der Zeichnung ist erkennbar, daß die Taue 11 im Dreieck angeordnet sind. Zwei von ihnen sind auf jeder Kante des Bodens 1 angeordnet und eins der Taue ist an der Spitze des gleichschenkligen Dreiecks unter dem Balken 15 befestigt.

Der Beutel 10 ist aus einem Leinentuch in einem Stück hergestellt und bildet gemäß der Darstellung der Fig. 2 der Zeichnung in zusammengelegter inaktiver Position in der Queransicht die Form eines umgedrehten T, so daß das Ladevolumen des Fahrzeugs frei zur Aufnahme von Schüttgut ist. Der Beutel weist ferner Seiten 18 aus Leinen auf, die die Vorder- und Hinterwand des Quaders bilden und ziehharmonikaartig zusammengefaltet sind, wenn der Beutel luftleer ist. Die Seitenteile 18 sind Kante an Kante mit dem die Beuteldecke bildenden Leinentuch 8 verschweißt. Die zusammengefaltete Seite 18 ist teilweise in Fig. 3 der Zeichnung zwischen dem oberen Teil der Leinendecke und dem unteren Teil der Leinendecke 8, die die Umhüllung des Beutels 10 bilden, zu erkennen.

Zur Ausbildung der Futterale 13 wird eine Längsschweißnaht 19 gebildet, die den oberen Teil des Leinentuchs 8 mit dem unteren Teil des Leinentuchs 8 verbindet derart, daß ein Tau 11 durch das Futteral durchgeführt werden kann.

Zum Aufblasen des Beutels 10 ist eine in seinem unteren Mittelteil angeordnete Öffnung 20 gemäß Fig. 1 der Zeichnung vorgesehen. Diese Öffnung 20 wird durch ein Anschlußstück mit großem Durchmesser gebildet bzw. verstärkt, wobei eine Größenordnung von z.B. 10 cm vorgesehen ist. Damit ist ein schnelles Luftablassen bei atmosphärischem Druck ermöglicht. Ferner gestattet das Anschlußstück den Anschluß einer Druckluftquelle, mit der unter bestimmten Druck vorzugsweise über ein Reduzierstück, das für die Kapazitäten des Druckluftgenerators eingerichtet ist, ein Aufblasen des Beutels 10 nach Art eines Airbags unter Ausübung eines Drucks und einer Ausschiebekraft auf das im Fahrzeug befindliche Schüttgut ermöglicht ist. Dieses wird seitlich bei geöffneten Klappen 4 und 6 aus den zugehörigen Entladeöffnungen ausgestoßen.

### Bezugszeichenliste

- 1: Boden
- 2: endseitige Querwand
- 3: endseitige Querwand
- 4: Klappe
- 5: untere Schwenkachse
- 6: Klappe
- 7: obere Schwenkachse
- 8: Leinentuch
- 9: Quertrennwand
- 10: Beutel oder Balg
- 11: Taue
- 12: Haken
- 13: Futteral
- 14: Umhüllung
- 15: Mittelbalken
- 16: Spannschloß
- 17: Fenster
- 18: Seite
- 19: Längsschweißnaht
- 20: Öffnung

## Patentansprüche

1. Entladevorrichtung für in einem Fahrzeug transportierte und durch eine Entladeöffnung des Laderaums entladbare Schüttgüter, beispielsweise körnige Produkte in loser Schüttung, mit einer auf dem Boden (1) des Fahrzeugs aufliegenden, das Schüttgut aufnehmenden aufblasbaren Unterlage, die aus wenigstens einem dichten Beutel oder Balg (10) aus flexiblem Material, insbesondere aus Leinen, nach Art eines Airbags gebildet ist,
**dadurch gekennzeichnet,**
daß dessen Form im aufgeblasenen Zustand derart ist, daß er den gesamten Rauminhalt des Laderaums einnimmt.

2. Entladevorrichtung gemäß Anspruch 1, dadurch gekennzeichnet, daß der Beutel oder Balg (10) in luftleerem Zustand den Boden (1) des Fahrzeugs bedeckt und eine sich im wesentlichen über die gesamte Höhe erstreckende Wand gegenüber der Entladeöffnung bildet.

3. Entladevorrichtung gemäß Anspruch 1 oder 2 für Fahrzeuge mit Entladeöffnungen auf seinen beiden Längsseiten, dadurch gekennzeichnet, daß der Beutel oder Balg (10) eine vertikale Mitteltrennwand im Fahrzeug bildet, die sich in Längsrichtung erstreckt und das Fahrzeug zwischen den seitlichen Entladeöffnungen unterteilt.

4. Entladevorrichtung gemäß einem der Ansprüche 1 bis 3, dadurch gekennzeichnet, daß der Beutel oder Balg (10) zum Befestigen am Fahrzeug Futterale (13) aufweist, die mit Befestigungsvorrichtungen zusammenwirken, welche die Futterale einerseits auf der Ebene der Entladekante und andererseits am oberen Teil des Fahrzeugs positionieren.

5. Entladevorrichtung gemäß Anspruch 4, dadurch gekennzeichnet, daß die Befestigungseinrichtungen von einem in dem Futteral (13) laufenden Tau (11) gebildet sind, wobei das Tau zwischen Haken (12) gespannt ist, die mit den Wänden des Fahrzeugs verbunden sind, wobei das Tau (11) Einstellvorrichtungen für eine geeignete Spannung aufweist.

6. Entladevorrichtung gemäß Anspruch 5, dadurch gekennzeichnet, daß die Taue (11) von einer Umhüllung (14) aus widerstandsfähigem Material zum Schutz der Futterale (13) umgeben sind.

7. Entladevorrichtung gemäß einem der Ansprüche 1 bis 6, dadurch gekennzeichnet, daß der Beutel oder Balg (10) einstückig aus einem Leinentuch, das auch die Befestigungseinrichtung umhüllt oder Futterale darin bildet, hergestellt ist.

8. Entladevorrichtung gemäß einem der Ansprüche 1 bis 6, dadurch gekennzeichnet, daß der Beutel oder Balg (10) aus einer im wesentlichen zylindrischen Hülle aus einem Leinentuch (8), das auch die Befestigungseinrichtung umhüllt oder Futterale darin bildet, und faltbaren Seitenwänden (18) aus Leinen hergestellt ist, die an den Querwänden des Fahrzeugs angeordnet sind.

9. Entladevorrichtung gemäß einem der Ansprüche 4 bis 8, dadurch gekennzeichnet, daß das Fahrzeug einen Mittelbalken (15) aufweist, der in Längsrichtung an seinem oberen Bereich angeordnet ist, wodurch zumindest ein Zwischeneinhängen des oberen Taus (11) möglich wird.

10. Entladevorrichtung gemäß einem der Ansprüche 1 bis 9, dadurch gekennzeichnet, daß das Fahrzeug auf halber Länge von einer Quertrennwand (9) unterteilt ist und zwei Beutel oder Balge (10) aufweist, von denen jeder zwei Abteilungen zum Aufnehmen der zu transportierenden Materialien bildet.

11. Entladevorrichtung gemäß einem der Ansprüche 1 bis 10, dadurch gekennzeichnet, daß sie eine am unteren Mittelbereich des Beutels oder Balgs (10) angeordnete Aufblasöffnung (20) aufweist.

12. Entladevorrichtung gemäß Anspruch 11, dadurch gekennzeichnet, daß die Aufblasöffnung (20) in Form eines Anschlußstücks mit großem Durchmesser in der Größenordnung von 10 cm zur Ermöglichung eines schnellen Luftablassens bei atmosphärischem Druck ausgebildet ist, wobei das Anschlußstück mit einem an den Druckluftgenerator angepaßten Reduzierstück zum Aufblasen versehen ist.

## Claims

1. Unloading device for bulk material, for example granular bulk products, transported in a vehicle and unloaded through a unloading opening in the loading chamber, with an inflatable support for receiving the bulk material resting on the floor (1) of the vehicle, which inflatable support is in the form of at least one sealed bag or bellows (10) of flexible material, especially canvas, in the manner of an airbag,
characterised
in that its form in the inflated condition is such that it takes up the entire space of the loading chamber.

2. Unloading device according to claim 1, characterised in that the bag or bellows (10) in the airless state covers the floor (1) of the vehicle and forms a wall opposite the unloading opening extending over the entire height.

3. Unloading device according to claim 1 or 2 for vehicles with unloading openings in its two longitudinal sides, characterised in that the bag or bellows (10) forms a vertical centre wall in the vehicle which extends in the longitudinal direction and subdivides the vehicle between the two lateral unloading openings.

4. Unloading device according to one of the claims 1 to 3, characterised in that the bag or bellows (10) has sheaths (13) for fixing to the vehicle, which sheaths cooperate with fixing means which position the sheaths on the one hand along the plane of the unloading edge and on the other hand at the top part of the vehicle.

5. Unloading device according to claim 4, characterised in that fixing arrangements are formed by a rope (11) running inside the sheath (13), the rope being tensioned between hooks (12) which are connected to the walls of the vehicle, the rope (11) having adjusting means for a suitable tension.

6. Unloading device according to claim 5, characterised in that the ropes (11) are enclosed by a casing (14) made of resistant material for protecting the sheaths (13).

7. Unloading device according to one of the claims 1 to 6, characterised in that the bag or bellows (10) is manufactured in one piece from a canvas cloth which also encloses the fixing device or forms sheaths therein .

8. Unloading device according to one of the claims 1 to 6, characterised in that the bag or bellows (10) is manufactured from an essentially cylindrical casing consisting of a canvas cloth (8), which also encloses the fixing device or forms sheaths therein, and foldable side walls (18) of canvas which are arranged on the lateral walls of the vehicle.

9. Unloading device according to one of the claims 4 to 8, characterised in that the vehicle has a centre beam (15) which is arranged in its upper region in the longitudinal direction, allowing at least an intermediate suspension of the top rope (11).

10. Unloading device according to one of the claims 1 to 9, characterised in that the vehicle along half its length is subdivided by a transverse wall (9) and has two bags or bellows (10) of which each forms two compartments for receiving the materials to be transported.

11. Unloading device according to one of the claims 1 to 10, characterised in that it has an inflation opening (20) arranged in the lower central region of the bag or bellows (10).

12. Unloading device according to claim 11, characterised in that the inflation opening (20) is constructed in the form of a connecting piece with a large diameter in the range of 10cm for allowing a rapid air discharge at atmospheric pressure, the connecting piece being provided with a reducing piece adapted for inflation to the air pressure generator.

## Revendications

1. Dispositif de déchargement pour des produits en vrac transportés dans un véhicule et susceptibles d'être déchargés par une ouverture de déchargement du compartiment de chargement, par exemple des produits en grains en vrac, comprenant un support gonflable posé sur le plancher (1) du véhicule et recevant le produit en vrac, ledit support étant formé par au moins un sac ou soufflet étanche (10) en matériau souple, en particulier en toile, à la manière d'un sac gonflable dit airbag,
caractérisé en ce que, dans la condition gonflée, sa forme est telle qu'il occupe la totalité du volume utile du compartiment de chargement.

2. Dispositif de déchargement selon la revendication 1, caractérisé en ce que le sac ou le soufflet (10) recouvre, dans la condition vide d'air, le plancher (1) du véhicule, et forme vis-à-vis de l'ouverture de déchargement une paroi qui s'étend sensiblement sur la totalité de la hauteur.

3. Dispositif de déchargement selon l'une ou l'autre des revendications 1 et 2, pour des véhicules avec des ouvertures de déchargement sur leurs deux côtés longitudinaux, caractérisé en ce que le sac ou le soufflet (10) forme une paroi de séparation médiane verticale dans le véhicule, qui s'étend en direction longitudinale et qui subdivise le véhicule entre les ouvertures de déchargement latérales.

4. Dispositif de déchargement selon l'une des revendications 1 à 3, caractérisé en ce que le sac ou le soufflet (10) comprend, pour la fixation sur le véhicule, des gaines qui coopèrent avec des dispositifs de fixation qui positionnent les gaines d'une part sur le plan de l'arête de déchargement et d'autre part au niveau de la partie supérieure du véhicule.

5. Dispositif de déchargement selon la revendication 4, caractérisé en ce que les dispositifs de fixation sont formés par un câble (11) qui circule dans la gaine (13), le câble étant tendu entre des crochets (12) qui sont reliés aux parois du véhicule, et le câble (11) comprend des dispositifs de réglage pour une tension appropriée.

6. Dispositif de déchargement selon la revendication 5, caractérisé en ce que les câbles (11) sont entourés par un enrobage (14) en matériau résistant afin de protéger les gaines (13).

7. Dispositif de déchargement selon l'une des revendications 1 à 6, caractérisé en ce que le sac ou le soufflet (10) est produit d'une seule pièce en toile, qui entoure également le dispositif de fixation, ou qui forme à l'intérieur les gaines.

8. Dispositif de déchargement selon l'une des revendications 1 à 6, caractérisé en ce que le sac ou le soufflet (10) est produit par un fourreau sensiblement cylindrique en toile (8) qui entoure également le dispositif de fixation qui forme à l'intérieur les gaines, et par des parois latérales (18) repliables en toile, qui sont agencées sur les parois transversales du véhicule.

9. Dispositif de déchargement selon l'une des revendications 4 à 8, caractérisé en ce que le véhicule comprend une poutre médiane (15), agencée dans sa région supérieure en direction longitudinale, grâce à quoi il est possible d'assurer au moins un accrochage intermédiaire du câble supérieur (11).

10. Dispositif de déchargement selon l'une des revendications 1 à 9, caractérisé en ce que le véhicule est subdivisé à mi-longueur par une paroi de séparation transversale (9), et en ce qu'il comprend deux sacs ou soufflets (10), dont chacun forme deux compartiments pour recevoir les matériaux à transporter.

11. Dispositif de déchargement selon l'une des revendications 1 à 10, caractérisé en ce qu'il comprend une ouverture de gonflage (20) agencée au niveau de la région médiane inférieure du sac ou du soufflet (10).

12. Dispositif de déchargement selon la revendication 11, caractérisé en ce que l'ouverture de gonflage (20) est réalisée sous la forme d'une pièce de raccordement avec un diamètre important, de l'ordre de grandeur de 10 cm pour rendre possible un gonflage rapide à l'air sous pression atmosphérique, ladite pièce de raccordement étant pourvue d'un élément réducteur adapté au générateur d'air comprimé pour le gonflage.
